# EUROPEAN PATENT APPLICATION

(11) **EP 2 336 803 A1**
(43) Date of publication of application: **22.06.2011**
(21) Application number: 10194810.7
(22) Date of filing: 13.12.2010
(51) Int. Cl.: G01S 7/40, H04B 17/00

(54) **Communication device**

(30) Priority: 17.12.2009 JP 2009286614
(71) Applicant: Fujitsu Limited, Kawasaki-shi, Kanagawa 211-8588 (JP)
(72) Inventor: Suzuki, Toshihide, Kawasaki-shi Kanagawa 211-8588 (JP)
(74) Representative: Holz, Ulrike

(57) **Abstract**

A communication device includes: a first signal generator generating an outgoing signal with a first frequency; a transmission terminal outputting the outgoing signal generated by the first signal generator; a receiving terminal receiving an incoming signal; a mixer mixing the incoming signal received by the receiving terminal with the outgoing signal generated by the first signal generator; a second signal generator generating a test signal with a second frequency different from the first frequency; and a coupling circuit coupling a line through which the test signal generated by the second signal generator is transferred with a line connecting to the receiving terminal to input the test signal into the mixer.

## Description

### FIELD

The embodiments discussed herein are related to a communication device.

### BACKGROUND

Radio communication devices and in-vehicle radars use high-frequency signals in a microwave or millimeter wave band and therefore request a transceiver circuit that transmits and receives such high-frequency signals through an antenna and converts the high-frequency signals into low-frequency signals. In operation tests on the transceiver circuit, a radiofrequency (RF) probe is placed in contact with a semiconductor chip to input and output a high-frequency test signal to test the semiconductor chip. On the other hand, a technique in which a self-diagnosis circuit is embedded in semiconductor chips such as memories and system LSIs is becoming widely used because these circuits are large in circuit size and slower in signal processing speed than radio systems. The technique is contributing to reduction of the number of test items and time.

There is a known transmitting power control device for communication devices that changes the electric power of outgoing signals according to a set electric power value (see for example Japanese Laid-Open Patent Publication No. 2001-230684). There is also a known transceiver that has a self-diagnosis function and communicates over a transmission line (see for example Japanese Laid-Open Patent Publication No. 9-46266)

However, the function of conducting self-diagnosis of high-frequency operations of radio and radar systems has not yet become a reality. In the current state of the art, tests on transceiver circuits are conducted by placing an RF probe in contact with one chip at a time to input a high-frequency signal to test the chip. However, the RF probe is expensive and requests a sophisticated test device that detects millimeter-wave signals, increasing the costs of the test.

### SUMMARY

An object of the present invention is to provide a communication device capable of being tested in a simple manner at low cost.

A communication device includes: a first signal generator generating an outgoing signal with a first frequency; a transmission terminal outputting the outgoing signal generated by the first signal generator; a receiving terminal receiving an incoming signal; a mixer mixing the incoming signal received by the receiving terminal with the outgoing signal generated by the first signal generator; a second signal generator generating a test signal with a second frequency different from the first frequency; and a coupling circuit coupling a line through which the test signal generated by the second signal generator is transferred with a line connecting to the receiving terminal to input the test signal into the mixer.

### BRIEF DESCRIPTION OF DRAWINGS

FIG. 1 is a diagram illustrating an exemplary configuration of a communication device according to a first embodiment;
FIG. 2 is a diagram illustrating an exemplary configuration of a communication device according to a second embodiment;
FIG. 3A is a circuit diagram illustrating an exemplary configuration of a first signal generator (VCO1);
FIG. 3B is a circuit diagram illustrating an exemplary configuration of a second signal generator (VCO2); and
FIG. 4 is a timing chart illustrating operations of the first signal generator (VCO1) and the second signal generator (VCO2).

### DESCRIPTION OF EMBODIMENTS

### (First embodiment)

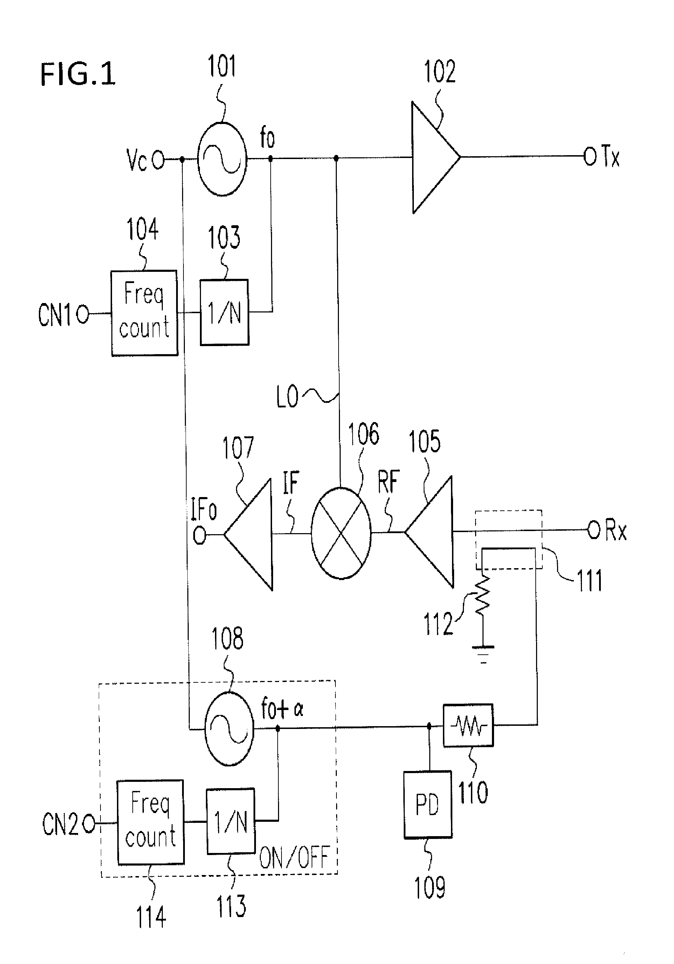

FIG. 1 illustrates an exemplary configuration of a communication device according to a first embodiment. The communication device is a semiconductor device including a transmitter, a receiver and a test unit. The communication device may be a communication device of an in-vehicle radar, for example. The transmitter includes a first signal generator (a first voltage-controlled oscillator) 101, a power amplifier 102 and a transmission terminal Tx. The receiver includes a receiving terminal Rx, a low-noise amplifier 105, a mixer 106, and an amplifier 107. The test unit includes a second signal generator (a second voltage-controlled oscillator) 108, a power detector 109, an attenuator 110, a coupling circuit 111, a resistance 112, frequency dividers 103 and 113, and frequency counters 104 and 114. The in-vehicle radar is installed in a vehicle and is capable of detecting the distance between the vehicle and a vehicle ahead and the speed relative to the vehicle ahead. The communication device has a transmitting mode, a receiving mode, and a test mode.

The transmitting mode will be described first. In the transmitting mode, the communication device wirelessly transmits an outgoing signal. The first signal generator 101, which may be a first voltage-controlled oscillator, generates an outgoing signal with a first frequency f0 depending on a control voltage Vc. The first frequency f0 may be 60 GHz, for example. The power amplifier 102 amplifies the outgoing signal generated by the first signal generator 101 and outputs the amplified signal to the transmission terminal Tx. The transmission terminal Tx outputs the outgoing signal generated by the first signal generator 101. The outgoing signal at the transmission terminal Tx is wirelessly transmitted through an antenna.

In the case of an in-vehicle radar, the outgoing signal is reflected by a vehicle ahead. The communication device receives the reflected signal and may calculate the inter-vehicle distance and the relative speed on the basis of the phase difference between the outgoing signal and the received signal.

The receiving mode will be described below. In the receiving mode, the communication device wirelessly receives an incoming signal. The receiving terminal Rx receives the incoming signal received wirelessly through the antenna. The low-noise amplifier 105 amplifies the incoming signal received at the receiving terminal Rx and outputs the amplified incoming signal into the mixer 106. The mixer 106 mixes the incoming signal RF amplified by the low-noise amplifier 105 with an outgoing signal (local signal) LO generated by the first signal generator 101 and outputs an intermediate-frequency signal IF. The intermediate-frequency signal IF has a frequency equivalent to the difference between the frequency of the incoming signal RF and the frequency of the outgoing signal LO. The amplifier 107 amplifies the intermediate-frequency signal IF and outputs the amplified signal IF0. As the inter-vehicle distance increases, the phase difference between the incoming signal RF and the outgoing signal LO increases and therefore the frequency of the IF0 signal increases. Conversely, as the inter-vehicle distance decreases, the phase difference between the incoming signal RF and the outgoing signal LO decreases and therefore the frequency of the IF0 signal decreases. The communication device may calculate the inter-vehicle distance and the relative speed with respect to the vehicle ahead on the basis of the signal IF0.

The test mode will be described below. In the test mode, operation of the receiver is tested and self-diagnosis is conducted without placing an RF probe in contact with the receiving terminal Rx. As in the transmitting mode, the first signal generator 101 generates an outgoing signal with a first frequency F0 according to a control voltage Vc. The second signal generator 108, which may be a second voltage-controlled oscillator, generates a test signal with a second frequency f0 + α according to the control voltage Vc. The second frequency f0 + α differs from the first frequency f0 by a frequency of α. The power detector 109 detects the electric power of the test signal generated by the second signal generator 108. The attenuator 110 attenuates the test signal generated by the second signal generator 108 and outputs the attenuated test signal to the coupling circuit 111. The coupling circuit 111 couples a line through which the test signal attenuated by the attenuator 110 is passing with a line connecting to the receiving terminal Rx to input the test signal to the low-noise amplifier 105. For example, the coupling circuit 111 may use a dielectric provided between the test signal line and the line connecting to the receiving terminal Rx to capacitively couple the two lines. The capacitive coupling allows the test signal to be transferred to the line connecting to the receiving terminal Rx. Alternatively, the coupling circuit 111 may be a magnetic coupling circuit to transfer the test signal. The output line of the attenuator 110 is connected to a reference potential (ground potential) node through the coupling circuit 111 and the resistance 112.

The low-noise amplifier 105 amplifies the test signal input through the coupling circuit 111 and outputs the amplified signal RF. Since the test mode is intended to test the operation of the receiver, the test signal in the test mode is preferably of substantially the same frequency and amplitude as the incoming signal in the receiving mode. The incoming signal received by radio communication in the receiving mode has attenuated with respect to the outgoing signal transmitted in the transmitting mode. The attenuator 110 attenuates the test signal to an amplitude approximately equal to the amplitude of the incoming signal. The attenuation value for the attenuator 110 is adjusted on the basis of the electric power of the test signal detected by the power detector 109. The mixer 106 mixes the test signal RF amplified by the low-noise amplifier 105 with the outgoing signal (local signal) LO generated by the first signal generator 101 and outputs an intermediate-frequency signal IF. The intermediate-frequency signal IF has a frequency α equal to the difference between the second frequency f0 + α of the test signal RF and the first frequency f0 of the outgoing signal LO. The amplifier 107 amplifies the intermediate-frequency signal IF and outputs the amplified signal IF0. Diagnosis of the operation of the receiver may be conducted by checking the signal IF0.

The first frequency divider 103 divides the frequency of the outgoing signal generated by the first signal generator 101 by N and outputs the resulting signal to the first frequency counter 104. Specifically, the first frequency divider 103 receives the outgoing signal with the first frequency f0 and outputs an outgoing signal with a frequency of f0/N. The first frequency counter 104 counts the frequency of the outgoing signal output from the first frequency divider 103 and outputs a count value CN1. The first frequency divider 103 is optional.

The second frequency divider 113 divides the frequency of the test signal generated by the second signal generator 108 by N and outputs the resulting signal to the second frequency counter 114. Specifically, the second frequency divider 113 receives the test signal with the second frequency f0 + α and outputs a test signal with a frequency of (f0 + α)/N. The second frequency counter 114 counts the frequency of the test signal output from the second frequency divider 113 and outputs a count value CN2. The second frequency divider 113 is optional.

If the frequency of the intermediate-frequency signal If0 is equal to the difference between the first frequency f0 of the outgoing signal LO and the second frequency f0 + α of the test signal RF, the receiver passes the operation test. The communication device refer to the count values CN1 and CN2 to check the frequency of the intermediate-frequency signal IF0 to determine whether the receiver has passed or failed the test.

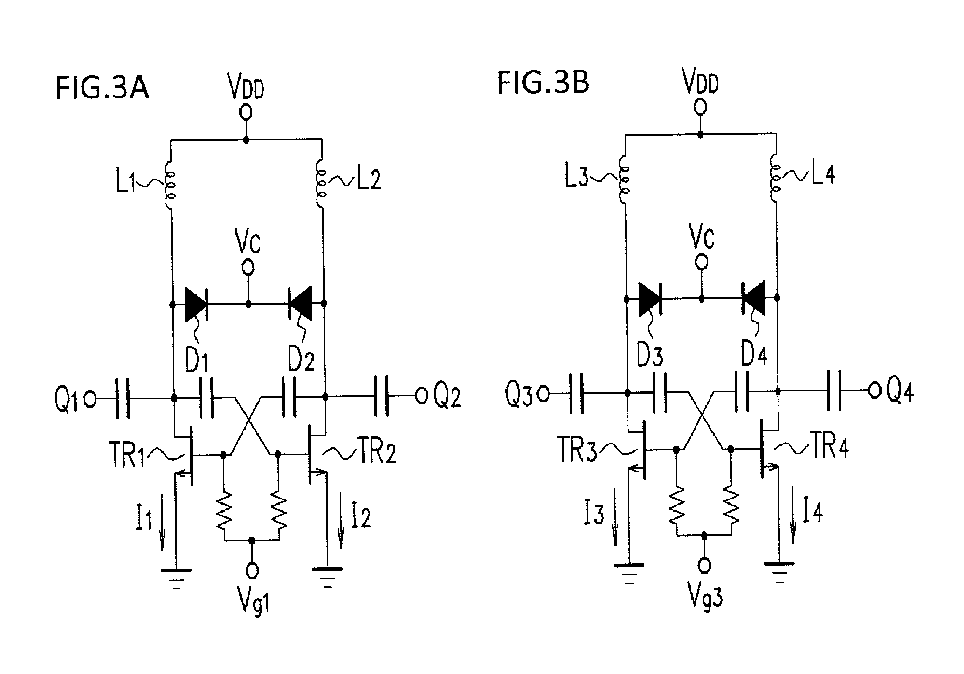

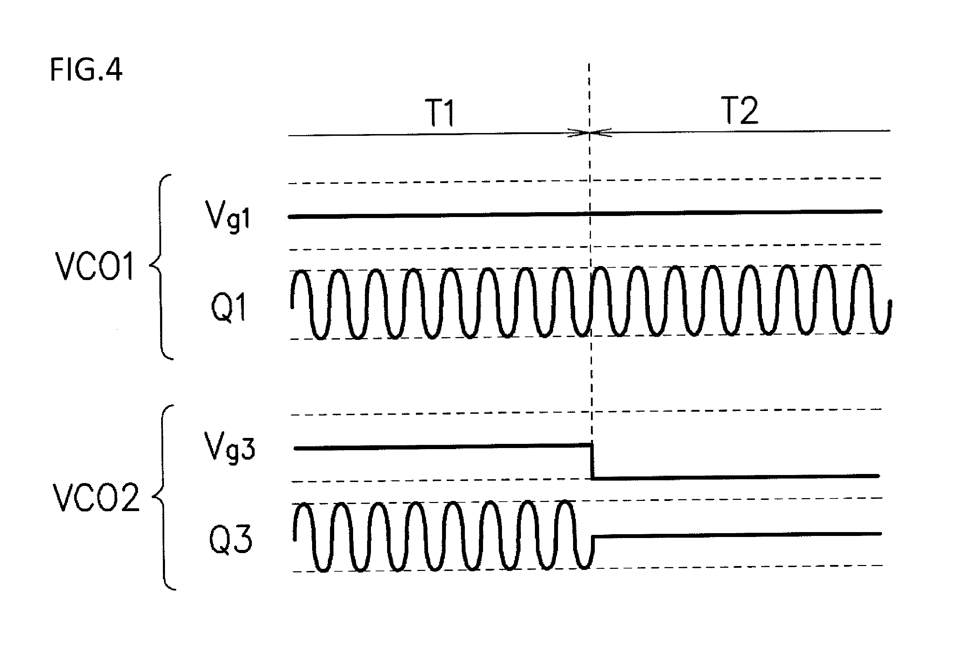

FIG. 3A is a circuit diagram illustrating an exemplary configuration of the first signal generator 101. The first signal generator 101 is an LC resonant voltage-controlled oscillator. An inductor L1 is connected between a power-supply voltage node VDD and the anode of a varactor diode D1. An inductor L2 is connected between the power-supply voltage node VDD and the anode of a varactor diode D2. A control voltage Vc is applied between the cathodes of the varactor diodes D1 and D2. The varactor diodes D1 and D2 are variable capacitances with a capacitance value that varies according to the control voltage Vc. An n-channel filed-effect transistor TR1 has a drain connected to the anode of the varactor diode D1, a gate connected to the anode of the varactor diode D2 through a capacitance, and a source connected to a reference potential (ground potential) node. Another n-channel field-effect transistor TR2 has a drain connected to the anode of the varactor diode D2, a gate connected to the anode of the varactor diode D1 through a capacitor, and a source connected to a reference potential (ground potential) node. The gate of the transistor TR1 is connected to a node of a gate bias voltage Vg1 through a resistance. The gate of the transistor TR2 is connected to the node of the gate bias voltage Vg1 through a resistance. A bias current I1 of the transistor TR1 and a bias current I2 of the transistor TR2 are controlled by the gate bias voltage Vg1. An output terminal Q1 is connected to the anode of the varactor diode D1 through a capacitance. An output terminal Q2 is connected to the anode of the varactor diode D2 through a capacitance. The output terminal Q1 outputs the outgoing signal with a first frequency f0 (see FIG. 4).

FIG. 3B is a circuit diagram illustrating an exemplary configuration of the second signal generator 108. The second signal generator 108, which is an LC resonant voltage-controlled oscillator, has the same configuration as the first signal generator 101 in FIG. 3A with the only differences being circuit element values. Inductors L3 and L4 correspond to the inductors L1 and I2 in FIG. 3A. Varactor diodes D3 and D4 correspond to the varactor diodes D1 and D2 in FIG. 3A. Transistors TR3 and TR4 correspond to the transistors TR1 and TR2 in FIG. 3A. A gate bias voltage Vg3 corresponds to the gate bias voltage Vg1 in FIG. 3A. Bias currents I3 and I4 correspond to the bias currents I1 and I2 in FIG. 3A. Output terminals Q3 and Q4 correspond to the output terminals Q1 and Q2. The output terminal Q3 outputs the test signal with a second frequency f0 + α (See FIG. 4).

As has been described above, the first and second signal generators 101 and 108 each has inductors, capacitances (including the varactor diodes) and transistors but have different inductor values, capacitor values, and transistor sizes or transistor bias currents. The configuration enables the first signal generator 101 to generate the signal with the first frequency f0 and the second signal generator 108 to generate the signal with the second frequency f0 + α which is different from the first frequency f0.

FIG. 4 is a timing chart illustrating operations of the first signal generator (VCO1) 101 and the second signal generator (VCO2) 108.

In the test mode period T1, the gate bias voltage Vg1 of the first signal generator 101 in FIG. 3A is forced to a positive voltage higher than 0 V and the gate bias voltage Vg3 of the second signal generator 108 in FIG. 3B is also forced to a positive voltage higher than 0V. The first signal generator 101 outputs a signal with the first frequency f0 from the terminal Q1. The second signal generator 108 outputs a signal with the second frequency f0 + α from the terminal Q3.

In the transmitting or receiving mode period T2, the gate bias voltage Vg1 of the first signal generator 101 in FIG. 3A is forced to a positive voltage higher than 0 V and the gate bias voltage Vg3 of second signal generator 108 in FIG. 3B is forced to 0 V. The first signal generator 101 outputs a signal with the first frequency f0 from the terminal Q1. The second signal generator 108 stops outputting the oscillator signal from the output terminal Q3.

As has been described above, the first signal generator 101 outputs the outgoing signal with the first frequency f0 from the output terminal Q1 in the transmitting mode, the receiving mode, and the test mode. The second signal generator 108 outputs the test signal with the second frequency f0 + α from the output terminal Q3 in the test mode and stop outputting the test signal at the output terminal Q3 in the transmitting mode and the receiving mode.

In the transmitting mode and the receiving mode, the communication device is not affected by the test signal because the second signal generator 108 outputs no test signal. In the receiving mode, the low-noise amplifier 105 may receive only an incoming signal from the receiving terminal Rx through the coupling circuit 111.

### (Second embodiment)

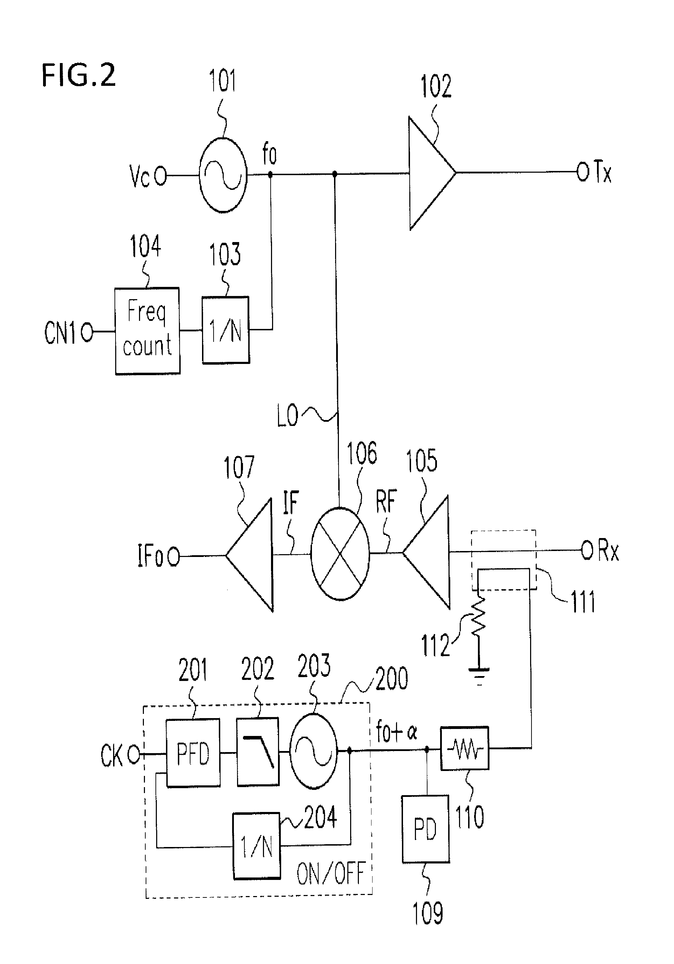

FIG. 2 illustrates an exemplary configuration of a communication device according to a second embodiment. In place of the second signal generator 108 in the first embodiment (FIG. 1), a different second signal generator 200 is provided in the second embodiment (FIG. 2). The differences from the first embodiment will be described below.

The second signal generator 200 is a phase-locked loop (PLL) circuit including a phase frequency detector 201, a low-pass filter 202, a voltage-controlled oscillator 203, and a frequency divider 204. The phase frequency detector 201 compares the phase frequency of a signal output from the frequency divider 204 with the phase frequency of a reference clock signal CK and outputs a signal that is dependent on the result of the comparison. The low-pass filter 202 outputs only the low-frequency components of the signal output from the phase frequency detector 201. The voltage-controlled oscillator 203 generates an oscillator signal with a frequency dependent on the voltage of the output signal from the low-pass filter 202. The frequency divider 204 divides the frequency of the oscillator signal from the voltage-controlled oscillator 203 by N and outputs a signal with a frequency of 1/N to the phase frequency detector 201. This feedback control forces the phase frequency of the signal output from the frequency divider 204 to be equal to the phase frequency of the reference clock CK. The voltage-controlled oscillator 203 outputs a signal with a frequency N times higher than the frequency of the reference clock signal CK. In this way, the voltage-controlled oscillator 203 in the second signal generator 200 outputs a test signal with a second frequency f0 + α.

The second embodiment includes the phase-locked loop circuit 200. The reference clock signal CK for the phase-locked loop circuit 200 may be changed to generate a test signal with the second frequency f0 + α slightly different from the first frequency f0 of an outgoing signal LO.

As has been described above, according to the first and second embodiments, a test signal to be input into the receiver is generated by the onboard second signal generator 108 or 200 and a part of the test signal is input into the receiver through the coupling circuit 111 to enable self-diagnosis of whether the receiver is properly operating or not.

The in-vehicle radar receives an outgoing signal transmitted from the in-vehicle radar and reflected and modulated by a target. The mixer 106 in the in-vehicle radar compares the received signal RF with the outgoing signal LO and extracts a modulated signal IF. Therefore, in an operation test on the receiver, the modulated signal requests to be input in the receiving terminal Rx of the receiver as a test signal. The second signal generator 108 or 200 is provided independently of the transmitter in order to generate the test signal. The test signal has a simulated modulated signal format with the second frequency f0 + α that is slightly different from the first frequency f0 of the outgoing signal LO. For the purpose of inputting the test signal to the receiving terminal Rx, a structure is provided that allows a part of the test signal to be input in the receiving terminal Rx through the coupling circuit 111, thereby enabling the test. Since the test signal has a frequency slightly different from that of the outgoing signal, the difference signal IF is extracted through the mixer 106. If the sequence of these operations is successfully performed, it may be determined that the receiver is properly operating.

There is an existing method that uses an expensive RF probe capable of inputting and outputting a high-frequency signal to contact circuits in a communication device as well as an expensive signal generator and an expensive monitor for measurement to test whether or not the communication device is properly operating. According to the first and second embodiments, the onboard second signal generator 108 or 200 generating a test signal is provided in the communication device and a part of the test signal is input into the receiver through the coupling circuit 111 to enable self-diagnosis of the communication device. Thus, the test cost may be significantly reduced compared with the exiting method.

The first and second communication devices may be tested in a simple manner at low cost without the externally placing an RF probe in contact with the devices and may be applied to radio communication systems and in-vehicle radars.

The embodiments described above are illustrative of only a few of the specific possible embodiments and should not be construed to limit the technical scope.

## Claims

1. A communication device comprising:
a first signal generator generating an outgoing signal with a first frequency;
a transmission terminal outputting the outgoing signal generated by the first signal generator;
a receiving terminal receiving an incoming signal;
a mixer mixing the incoming signal received by the receiving terminal with the outgoing signal generated by the first signal generator;
a second signal generator generating a test signal with a second frequency different from the first frequency; and
a coupling circuit coupling a line through which the test signal generated by the second signal generator is transferred with a line connecting to the receiving terminal to input the test signal into the mixer.

2. The communication device according to claim 1, wherein the first signal generator includes a first oscillator and the second signal generator includes a second oscillator.

3. The communication device according to claim 2, wherein each of the first and second oscillators comprises an inductor, a capacitance, and a transistor and the first and second oscillators differ from each other in the value of the inductor, the value of the capacitance, the size of the transistor, or bias current of the transistor.

4. The communication device according to claim 1, wherein the first signal generator comprises an oscillator and the second signal generator comprises a phase-locked loop circuit.

5. The communication device according to claim 1, wherein the second signal generator outputs the test signal in a test mode and stops outputting the test signal in a transmitting mode and a receiving mode.

6. The communication device according to claim 2, wherein the second signal generator outputs the test signal in a test mode and stops outputting the test signal in a transmitting mode and a receiving mode.

7. The communication device according to claim 3, wherein the second signal generator outputs the test signal in a test mode and stops outputting the test signal in a transmitting mode and a receiving mode.

8. The communication device according to claim 4, wherein the second signal generator outputs the test signal in a test mode and stops outputting the test signal in a transmitting mode and a receiving mode.

9. The communication device according to any one of claims 1 to 8, further comprising:
a first frequency counter counting the frequency of the outgoing signal generated by the first signal generator; and
a second frequency counter counting the frequency of the test signal generated by the second signal generator.

10. The communication device according to claim 9, further comprising:
a first frequency divider dividing the frequency of the outgoing signal generated by the first signal generator and outputting the resulting signal to the first frequency counter; and
a second frequency divider dividing the frequency of the test signal generated by the second signal generator and outputting the resulting signal to the second frequency counter.

11. The communication device according to any one of claims 1 to 10, further comprising a power detector detecting electric power of the test signal generated by the second signal generator.

12. The communication device according to any one of claims 1 to 11, further comprising an attenuator attenuating the test signal generated by the second signal generator and outputting the attenuated test signal to the coupling circuit.

13. The communication device according to any one of claims 1 to 12, further comprising:
a first amplifier amplifying the outgoing signal generated by the first signal generator and outputting the amplified outgoing signal to the transmission terminal; and
a second amplifier amplifying a signal output from the coupling circuit and outputting the amplified signal to the mixer.
